# FASCICULE DE BREVET EUROPEEN

(11) **EP 2 524 194 B1**
(45) Date de publication et mention de la délivrance du brevet: **28.06.2017**
(21) Numéro de dépôt: 11704278.8
(22) Date de dépôt: 11.01.2011
(51) Int. Cl.: G01D 5/353, G01D 11/24, G01M 11/08

(54) **BANDE SOUPLE COMPRENANT AU MOINS UNE FIBRE OPTIQUE POUR EFFECTUER DES MESURES DE DEFORMATION ET/OU DE TEMPERATURE**
FLEXIBLER STREIFEN MIT MINDESTENS EINER GLASFASER ZUR DURCHFÜHRUNG VON VERFORMUNGS- UND/ODER TEMPERATURMESSUNGEN
FLEXIBLE STRIP COMPRISING AT LEAST ONE OPTICAL FIBRE FOR CARRYING OUT DEFORMATION AND/OR TEMPERATURE MEASUREMENTS

(30) Priorité: 11.01.2010 FR 1050136
(43) Date de publication de la demande: 21.11.2012
(73) Titulaire: TERRE ARMEE INTERNATIONALE, 92500 Rueil Malmaison (FR)
(72) Inventeur: FREITAG, Nicolas, F-91400 Orsay (FR); TURPIN, Marc, F-03700 Bellerive Sur Allier (FR); CHARBONNIER, Philippe, F-42600 Montbrison (FR)
(74) Mandataire: Cabinet Plasseraud
(86) Numéro de dépôt international: PCT/FR2011/050047
(87) Numéro de publication internationale: WO 2011/083286

(56) Documents cités:
- EP-A1- 2 128 571
- DE-A1- 3 305 234
- US-A- 5 399 854
- GLISIC B ET AL: "Integration of long-gage fiber optic sensor into a fiber-reinforced composite sensing tape", PROCEEDINGS OF THE SPIE - THE INTERNATIONAL SOCIETY FOR OPTICAL ENGINEERING, vol. 5050, 2003, pages 179-186, XP002649870, SPIE-INT. SOC. OPT. ENG. USA ISSN: 0277-786X, DOI: 10.1117/12.484262

## Description

La présente invention concerne une bande souple comprenant au moins une fibre optique pour effectuer des mesures de déformation et/ou de température dans ou sur un ouvrage de génie civil.

Elle vise notamment à permettre de localiser et mesurer des perturbations telles que des déformations et/ou des variations de température dans ou sur des ouvrages de génie civil. De telles mesures sont en général effectuées sur de longues périodes de temps afin de déterminer par exemple si l'ouvrage s'endommage et risque de se dégrader ; ces contrôles ou mesures permettent un suivi sécuritaire, notamment une maintenance prédictive.

Dans des dispositifs connus de l'état de la technique, des fibres optiques sont disposées sur une surface d'un ouvrage à surveiller ou au sein de cet ouvrage afin de procéder à des mesures in situ. Ces fibres optiques ont en général un diamètre compris entre 80 et 500 µm, notamment d'environ 150 µm, comprenant une partie centrale constituée d'un coeur et d'une gaine optique aptes à laisser propager la lumière et au moins une gaine de protection.

L'intégration de telles fibres optiques sur ou dans un ouvrage de génie civil, présente néanmoins des inconvénients. En effet, ces fibres optiques sont fragiles et peuvent être endommagées au moment de la pose, ou ultérieurement sous l'effet des contraintes qu'elles subissent (notamment efforts de cisaillement, efforts tranchant, courbures non désirées de la fibre). Par ailleurs, elles peuvent dans certain cas se dégrader au cours du temps, notamment dans des milieux « hostiles » où il y a des risques de pénétration d'eau ou d'ions alcalins, par exemple suivie d'un contact prolongé avec un tel milieu « hostile ».

Un but de la présente invention est de proposer un dispositif permettant d'effectuer des localisations et des mesures de déformation et/ou des mesures de température d'une structure, c'est à dire d'un ouvrage de génie civil ou d'une partie d'un ouvrage de génie civil, qui obvie aux inconvénients précités. Par ailleurs, le but de l'invention vise également à proposer un tel dispositif à un coût raisonnable et à permettre une mise en place aisée dans la structure.

L'invention propose ainsi une bande souple selon la revendication 1. Il convient de noter que ladite bande souple peut être sensiblement neutre par rapport à la résistance mécanique de la structure de l'ouvrage de génie civil ou bien participer à un rôle de renfort de cette structure. Néanmoins, le matériau de la bande souple est différent de celui de l'essentiel de ladite structure. Ce dernier est par exemple constitué de sols, de béton, de matériaux de scellement.

Grâce à la bande souple selon l'invention on peut notamment protéger la ou les fibres optique(s) des agressions mécaniques et physico chimiques précitées et d'assurer un transfert de charge adapté aux mesures entre la structure (milieu hôte) et la ou les fibres optique(s) permettant d'effectuer des localisations et des mesures de déformation et/ou des mesures de température d'une structure.

On entend par « bande » une pièce susceptible de s'étendre longitudinalement, selon un axe longitudinal, dont la longueur est très significativement supérieure à la largeur dans le sens perpendiculaire à l'axe longitudinal et où cette largeur est très significativement supérieure à l'épaisseur. A titre d'exemples la longueur d'une telle bande est d'au moins un mètre, par exemple d'environ 3 à 10 mètres, voire significativement au-delà (plusieurs dizaines à centaines de mètres, voire même plusieurs kilomètres); la largeur est comprise entre 1 et 30 cm, par exemple entre 5 et 10 cm ; l'épaisseur est comprise entre 1 millimètre et quelques centimètres, par exemple entre 2 et 10 mm.

A titre d'exemple, de telles bandes souples peuvent équiper des remblais, des digues, des ouvrages en sol renforcé ou compacté. De telles bandes peuvent également être introduites dans des sols naturels (par forages simples ou dirigés) et/ou noyées dans des matériaux de scellement (mortiers, résines, ou autres matériaux de scellement). De telles bandes peuvent également être positionnées en surface d'éléments des structures métalliques ou en béton, voire directement intégrées dans le béton (éléments de ponts, barrages, radiers,...). Elles peuvent également être intégrées en cours de construction dans des barrages en béton compacté au rouleau (BCR). Elles peuvent être mises en place dans des tranchées peu profondes en surface d'un terrain naturel, par exemple dans une zone à risque vis-à-vis d'effondrements karstiques ou une zone de grands glissements de terrain.

On qualifie de « très significativement supérieure », une grandeur qui est au moins le double de la grandeur à laquelle on la compare.

Selon un mode de réalisation la largeur de la bande est au moins cinq fois supérieure à son épaisseur.

On entend par « bande souple » une bande susceptible de se déformer aisément selon sa longueur. A titre d'exemple on considère qu'une bande est souple quand on peut la courber selon un rayon de courbure de 200 mm.

Selon un mode de réalisation on peut courber une bande souple selon un rayon de courbure de 50 mm.

Selon un mode de réalisation, la bande est produite en grande longueur et peut être coupée pour former des bandes de longueur désirée, destinées à être installées sur ou dans un ouvrage. Grâce à sa souplesse, une bande de grande longueur peut être enroulée sur un mandrin pour former une bobine ou un touret de chantier. Il est ainsi très aisé de déplacer la bande de grande longueur et de la dérouler, et éventuellement de la couper, par exemple sur un chantier, à la longueur désirée.

Par ailleurs, la souplesse de cette bande permet de l'adapter aux irrégularités qui peuvent se rencontrer sur ou dans un ouvrage, tout en préservant la (ou les) fibre(s) optique(s) destinée(s) à effectuer les mesures souhaitées et comprise(s) dans ladite bande souple. Ces irrégularités peuvent par exemple être liées à la forme de l'ouvrage, à la présence de composants de l'ouvrage susceptibles d'endommager une fibre optique, comme par exemple des agrégats, des ferraillages, des graves présents dans les sols compactés, des éléments composés de mortiers de scellement...

En outre, les inventeurs ont pu constater que le choix d'un dispositif, comprenant au moins une fibre optique, sous forme de bande est particulièrement avantageux pour effectuer des mesures de déformation dans un ouvrage, par exemple dans un remblai, une digue, ou un ouvrage en sol renforcé. En effet, la forme d'une bande permet un bon transfert de charge entre l'environnement (mesurande) et le capteur, et peut entraîner selon les cas une amplification des effets de mesurande par augmentation de la section efficace de détection.

Les inventeurs ont constaté que la pérennité et le transfert de charge d'une bande souple, notamment insérée dans un ouvrage, est très significativement améliorée quand la fibre (ou les fibres optiques) est (sont) entourée(s) d'une matrice polymérique thermoplastique comprenant des fibres continues de renforcement s'étendent sensiblement selon l'axe longitudinal de la bande souple. Les inventeurs ont pu déterminer qu'une amélioration significative du comportement d'une telle bande souple intervenait quand la quantité massique de fibres continues de renforcement s'étendant sensiblement selon l'axe longitudinal, est supérieure ou égale à dix fois la quantité massique de fibre(s) optique(s).

Selon l'invention, on entend par une orientation « sensiblement selon un axe », une orientation comprise entre +10° et -10° par rapport à cet axe, notamment comprise entre +5° et -5°. Selon un mode de réalisation, les fibres continues de renforcement s'étendent selon l'axe longitudinal de la bande souple.

Selon un mode de réalisation, la matrice polymérique thermoplastique est choisie parmi la liste de matrices suivante : polyéthylène, polypropylène, PVC, polyéther.

La matrice polymérique thermoplastique peut aussi comprendre des élastomères.

Selon un mode de réalisation, les fibres continues de renforcement sont des fibres polymériques dont la matrice est notamment choisie dans la liste de matrice suivante : polyester, polyamide, polyoléfine.

Selon un autre mode de réalisation, qui peut être combiné avec le précédent, les fibres continues de renforcement sont choisies parmi les fibres de verre, les fibres d'aramide, les fibres de carbone, les fils de fibres végétales, telles les fibres de lin ou de chanvre, les fibres métalliques. Les fibres continues de renforcement sont en général, mais de manière non limitative, assemblées sous la forme de fils comprenant une pluralité de fibres.

Les fibres continues de renforcements sont disposées essentiellement, voire exclusivement, parallèles entre elles et suivant la direction de l'axe de la bande. Elles peuvent aussi être assemblées sous forme de corde(s), tresse(s) ou toron(s).

Selon un mode de réalisation, la partie centrale de la fibre optique, apte à laisser propager la lumière, est minérale, notamment à base de silice.

Selon un autre mode de réalisation, cette partie centrale de la fibre optique est organique (dites « POF » pour « Plastic Optical Fiber »).

Afin de calculer la quantité massique, MFO, de fibre(s) optique(s) dans une bande souple, on prend en considération la partie centrale (coeur et gaine optique) et la gaine de protection solidaire de cette partie centrale. La fibre optique peut être par ailleurs recouverte par d'autres protections, notamment pour former un câble, mais les autres protections ne sont pas prises en compte pour calculer la valeur de MFO. Ces autres protections peuvent constituer en un gainage de métal, en des enveloppes diverses, par exemple constituées de tissus et/ou de couches organiques. L'ensemble peut se présenter sous la forme d'un câble.

La fibre optique utilisée peut être monomode ou multimode.

Selon un mode de réalisation, la fibre optique comprend des réseaux de Bragg. Selon au autre mode de réalisation la fibre optique est utilisée directement sans ajout d'un quelconque élément transducteur

La ou les fibre(s) optique(s) d'une bande souple est (sont) destinée(s) à être relié(es) à un dispositif de métrologie susceptible d'émettre de la lumière et de mesurer des caractéristiques de la lumière réfléchie, rétro diffusée ou transmise dans la fibre optique.

Parmi les dispositifs de mesure utilisables, on peut citer les suivantes : OTDR (pour « Optical-Time-Domain-Reflectomer », (Réflectométrie optique résolue dans le temps), OTDR-R (OTDR-Raman), BOTDR (OTDR à diffusion Brillouin), OBR (pour « Optical-backscatter-reflecometry », réflectométrie Rayleigh cohérente multi longueurs d'onde), métrologie de réflexions sur des réseaux de Bragg, métrologie par interférométrie, métrologie par polarimétrie.

Une bande souple selon l'invention, comprenant au moins une fibre optique peut en outre comporter l'une ou plusieurs des caractéristiques optionnelles ci-dessous, considérées individuellement ou selon toutes les combinaisons possibles :
- la quantité massique de fibres de renforcement continues, s'étendant sensiblement selon l'axe longitudinal, MFC, est supérieure ou égale à cinquante fois la quantité massique de fibre(s) optique(s), MFO ;
- une zone de la matrice polymérique comprend des fibres continues de renforcement, et est dépourvue de fibre optique, et cette zone est disposée au moins partiellement autour d'une fibre optique ;
- au moins une fibre optique est disposée en contact direct avec la matrice polymérique ;
- au moins une fibre optique est disposée dans un tube dont la paroi externe est en contact direct avec la matrice polymérique ; il est envisageable qu'une même fibre optique soit en contact direct avec la matrice sur une partie de sa longueur et dans un tube sur une autre partie de sa longueur, dans ce cas des parties différentes d'une même fibre optique peuvent avoir des fonctions différentes (par exemple mesure d'allongement et mesure de température respectivement pour chacune des parties précitées) ;
- la bande souple comprend une pluralité de zones où la matrice polymérique comprend des fibres continues de renforcement et au moins une fibre optique, et où ces zones sont disposées parallèlement entre elles dans le sens de la longueur de la bande, côte à côte dans le sens de la largeur de la bande et séparées par des zones de matrice polymérique dépourvue de fibre continue de renforcement ;
- au moins une fibre optique est disposée sensiblement parallèlement à l'axe longitudinal de la bande souple ;
- au moins une fibre optique est disposée autour d'une direction sensiblement parallèle à l'axe longitudinal de la bande souple, par exemple selon une trajectoire sinusoïdale ;
- une fibre optique est recouverte d'au moins 0,1 mm de matrice polymérique, voire d'au moins 0,5 mm de matrice polymérique ;
- au moins une surface externe de la bande souple présente un degré de rugosité ou des aspérités plus ou moins marqués permettant d'optimiser le transfert de charges entre le milieu hôte et ladite bande ;
- au moins un bord externe de la bande souple présente pour une partie crantée permettant d'optimiser le transfert de charges entre le milieu hôte et ladite bande.

La présente invention vise également un réseau de bandes souples solidarisées entre elles, notamment par thermo-soudage, où les bandes souples comprennent les caractéristiques de l'un quelconque des modes de réalisation ci-dessus. Il est ainsi possible d'effectuer des mesures dans un espace bidimensionnel.

La présente invention porte également sur un dispositif de localisation et de mesures de déformation et/ou de mesure de température comprenant au moins une bande souple selon les caractéristiques de l'un quelconque des modes de réalisation ci-dessus ou un réseau de bandes souples ci-dessus et un dispositif de métrologie relié à au moins une fibre optique d'une bande souple et susceptible d'émettre de la lumière et de mesurer des caractéristiques de la lumière réfléchie, rétro diffusée ou transmise dans ladite fibre optique.

Selon un mode de réalisation dudit dispositif, au moins une bande souple comprend au moins une fibre optique disposée en contact direct avec la matrice polymérique et cette fibre optique est utilisée pour procéder à des mesures de déformation.

Selon un mode de réalisation dudit dispositif, au moins une bande souple comprend au moins une fibre optique disposée dans un tube dont la paroi externe est en contact direct avec la matrice polymérique et cette fibre optique est utilisée pour procéder à des mesures de température.

La présente invention vise également un procédé de localisation et de mesures de déformation et/ou de mesure de température dans une ou sur une structure d'un ouvrage de génie civil mettant en oeuvre un dispositif selon l'une quelconque des caractéristiques ci-dessus comprenant une étape d'émission de lumière et une étape de mesure des caractéristiques de la lumière réfléchie, rétro diffusée ou transmise dans au moins une fibre optique.

Selon un mode de réalisation de ce procédé, au moins une bande souple comprend au moins une fibre optique disposée en contact direct avec la matrice polymérique et cette fibre optique est utilisée pour procéder à des mesures de déformation et au moins une fibre optique disposée dans un tube dont la paroi externe est en contact direct avec la matrice polymérique et cette fibre est utilisée pour procéder à des mesures de température, et que l'on procède en même temps à la mesure de déformation et à la mesure de température.

Selon un autre mode de réalisation de ce procédé, au moins une bande souple comprend au moins une fibre optique disposée en contact direct avec la matrice polymérique et au moins une fibre optique disposée dans un tube dont la paroi externe est en contact direct avec la matrice polymérique et ces deux fibres optiques sont utilisées simultanément pour faire des mesures interférométriques.

L'invention sera mieux comprise à la lecture de la description qui va suivre, donnée uniquement à titre d'exemple et faite en se référant aux dessins annexés dans lesquels :
- les figures 1 et 2 sont des vues schématiques en perspective de mode de réalisation d'une bande souple selon l'invention ;
- les figures 3 à 5 sont des vues schématiques en coupe perpendiculaire à l'axe longitudinal de mode de réalisation d'une bande souple selon l'invention ;
- les figures 6 et 7 sont des vues schématiques en perspective de mode de réalisation d'une bande souple selon l'invention ;
- les figures 8 et 9 sont des vues schématiques en coupe dans l'épaisseur et selon l'axe longitudinal de mode de réalisation d'une bande souple selon l'invention ;
- les figures 10a, b et c sont des vues schématiques de dessus de mode de réalisation d'une bande souple selon l'invention ;
- la figure 11 est une vue schématique en perspective d'un réseau de bandes souples solidarisées entre elles selon l'invention.

Pour des raisons de clarté, les différents éléments représentés sur les figures ne sont pas nécessairement à l'échelle. Sur ces figures, des références identiques correspondent à des éléments identiques.

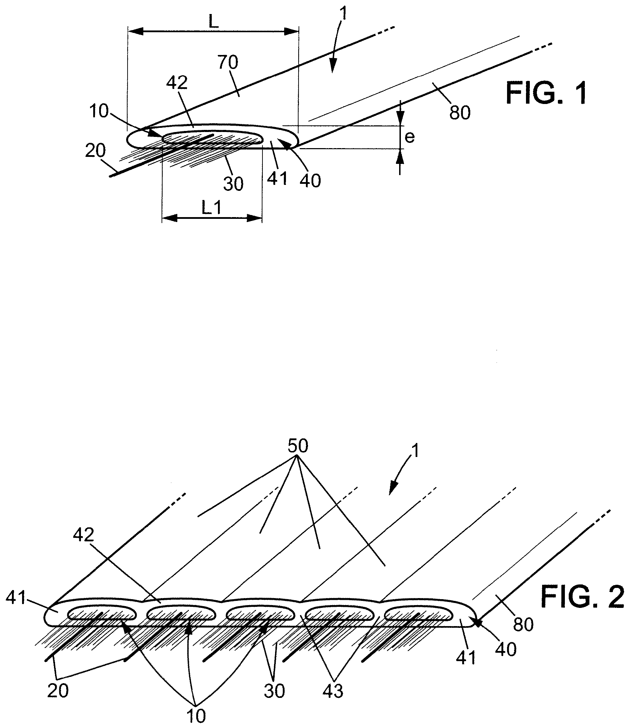

La figure 1 présente une vue schématique en perspective d'un mode de réalisation d'une bande souple 1 selon l'invention.

Cette bande souple 1 comprend une fibre optique 20 disposée selon l'axe longitudinal, perpendiculaire à la largeur L et à l'épaisseur e de ladite bande souple et entourée d'une matrice polymérique thermoplastique comprenant des fibres continues de renforcement 30. Ces fibres continues de renforcement 30 sont disposées dans une zone 10 formant un canal au sein duquel est disposée la fibre optique 20. La zone 10, de largeur L1, est sensiblement disposée au coeur de la bande 1 et est entourée par une zone 40 de matrice polymérique dépourvue de fibre continue de renforcement. Dans le cas représenté, la zone 40 comprend deux zones latérales 41 situées de chaque côté de la largeur de la zone 10 comprenant les fibres continues de renforcement et deux zones 42 situées de chaque côté de l'épaisseur de ladite zone 10. La bande souple 1 représentée comprend une surface principale 70 s'étendant dans le sens de la largeur et le sens longitudinal de la bande et un bord 80 s'étendant dans le sens de l'épaisseur et le sens longitudinal de ladite bande. Dans cet exemple, la surface 70 est sensiblement plate et uniforme et le bord 80 est arrondi.

A titre d'exemple :
L = 20 mm
e = 3 mm
L1 = 15 mm
MFO = 330 dtex
(l'unité « dtex » correspond au g par 10 000 m)
MFC = 150 000 dtex
MFC/MFO = 450

La figure 2 présente une vue schématique en perspective d'un deuxième mode de réalisation d'une bande souple 1 selon l'invention. Cette bande souple comprend une pluralité de zones 10 formant canaux au sein de chacun desquels est disposée une fibre optique 20. Deux canaux contigus sont séparés par une paroi 43 de matrice polymérique dépourvue de fibres de renforcement. On peut considérer qu'une bande exemplifiée en figure 2 correspond à la juxtaposition d'une pluralité de « pseudo-bandes » 50, du type de celle exemplifiée en figure 1.

A titre d'exemple :
L (largeur totale de la bande 1) = 50 mm
e = 4 mm
MFO = 1 320 dtex
MFC = 350 000 dtex
MFC/MFO = 265

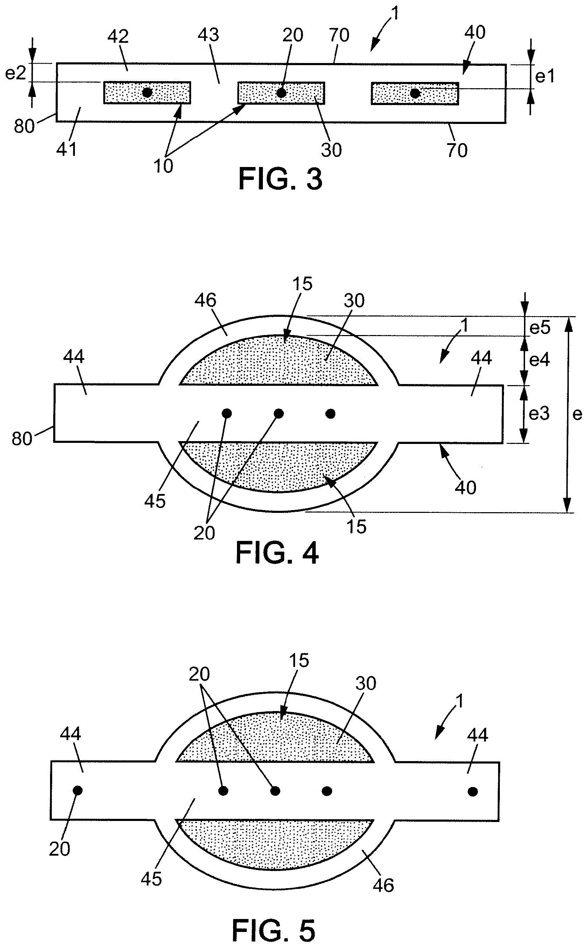

Selon un autre mode de réalisation représenté en coupe en figure 3, la bande souple 1 a une section sensiblement rectangulaire, de même que les zones 10 formant canaux au sein de chacun desquels est disposée une fibre optique 20. A titre d'exemple, l'épaisseur e2 de la zone 42, entre une zone 10 formant canal et la surface principale 70 de la bande est comprise entre 10 et 30% de l'épaisseur totale e de ladite bande. Une fibre optique 20 est située à une distance e1 de la surface principale 70 de la bande. Dans l'exemple représenté, la fibre optique est située au centre de la bande.

Selon un mode de réalisation, l'épaisseur entre l'extérieur de la fibre optique et une paroi extérieure de la bande souple selon l'invention, par exemple l'épaisseur e1, est d'au moins 0,1 mm de matrice polymérique (avec ou sans fibre continue de renforcement), voire d'au moins 0,5 mm de ladite matrice polymérique.

De manière avantageuse, les bandes souples correspondant aux figures 1 à 3 peuvent être enroulées sur un mandrin pour former une bobine ou un touret de chantier. Selon ces modes de réalisation, l'enroulement peut être compact, avec une surface principale 70 supérieure en contact avec une surface principale 70 inférieure.

Les figures 4 et 5 représentent des vues en coupes d'autres modes de réalisation d'une bande souple selon l'invention où la surface principale n'est pas plate. Ces bandes peuvent néanmoins être enroulées sur un mandrin pour former une bobine ou un touret de chantier, mais de manière moins compacte qu'avec les modes de réalisation précédents.

Dans le mode de réalisation représenté en figure 4, des fibres optiques 20 sont disposées dans une partie centrale 45 de la bande, en matrice polymérique dépourvue de fibres continues de renforcement, et une zone 15 en matrice polymérique comprenant des fibres continues de renforcement 30 est disposée de chaque côté de la partie centrale 45 comprenant les fibres optiques 20. Cette partie centrale 45 est prolongée de chaque côté, dans le sens de la largeur par des ailes 44 dépourvues de fibres continues de renforcement et de fibre optique. La zone 15 en matrice polymérique comprenant des fibres continues de renforcement est par ailleurs recouverte par une couche 46 de matrice polymérique dépourvue de fibres continues de renforcement. La zone 15 permet d'assurer la résistance mécanique de la bande et la dimension des ailes 44 peut être choisie de manière à optimiser le transfert de charge entre la bande souple et le milieu qui l'environne.

Selon une variante du mode de réalisation de la figure 4, représentée en figure 5, des fibres optiques 20 sont également disposées dans les ailes 44.

A titre d'exemple pour les modes de réalisation selon les figures 4 et 5 :
e (épaisseur totale de la bande souple) = 20 mm
e3 (épaisseur de la partie centrale) = 5 mm
e4 (épaisseur maximale de la zone 15) = 5 mm
e5 (épaisseur de la couche 46) = 2,5 mm
MFC = 150 000 dtex
Pour le mode de réalisation de la figure 4 : MFO = 990 dtex
MFC / MFO = 150
Pour le mode de réalisation de la figure 5 : MFO = 1650 dtex
MFC / MFO = 90

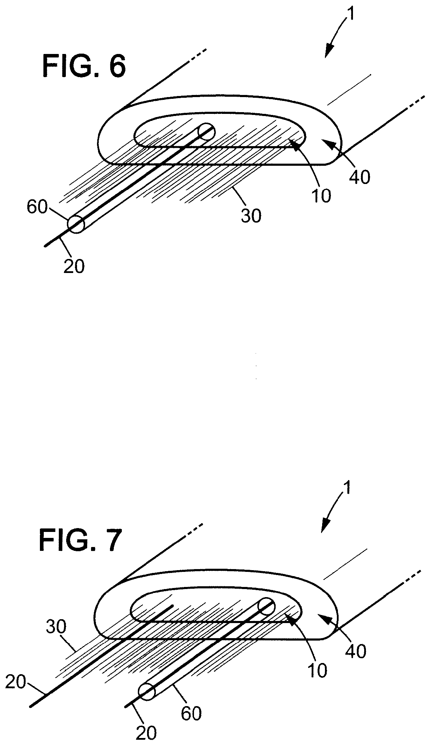

Les figures 6 et 7 présentent des vues schématiques en perspective de modes de réalisation selon l'invention où au moins une fibre optique 20 est disposée libre de contraintes dans un tube 60. Ces modes de réalisation sont présentés dans le cas d'une configuration de la bande souple similaire à celle de la figure 1. Il va de soi que ces modes de réalisation peuvent trouver des applications dans les autres bandes souples décrites ci-dessus, ou toute autre bande souple selon l'invention. On note que la fibre 20 disposée dans un tube 60 peut être disposée dans ce tube sur toute sa longueur ou seulement sur une partie de sa longueur, l'autre partie étant solidaire ou non de la matrice polymérique. La fibre optique « tubée », libre de contraintes, peut être intégrée dans un canal 10 (représenté) ou dans une zone 41 de matrice polymérique dépourvue de fibre continue de renforcement (non représenté).

Il convient de noter qu'une fibre optique disposée dans un tube est essentiellement indépendante des efforts qui s'appliquent sur la bande souple dans laquelle elle se trouve. Une telle disposition est particulièrement adaptée pour procéder à des mesures de température.

Selon le mode de réalisation de la figure 7, une fibre optique disposée dans un tube 60 est associée à une fibre optique solidaire de la matrice polymère. Une telle bande est particulièrement adaptée pour faire simultanément des mesures de température, grâce à la fibre libre de contraintes dans le tube, et des mesures de déformation. Grâce à la mesure de température, il est possible de corriger les mesures de déformation d'éventuels thermo mécaniques et thermo optiques et d'obtenir ainsi des mesures précises de déformations locales d'origine essentiellement mécanique.

Il est également possible d'effectuer des mesures interférométriques avec ces deux fibres optiques.

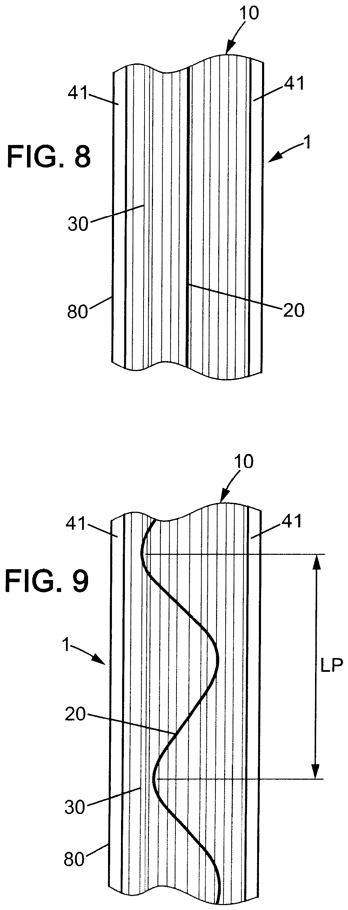

Les figures 8 et 9 présentent des vues schématiques, en coupe dans l'épaisseur et dans le sens de la longueur, de modes de réalisation de bandes souples selon l'invention, du type de celles illustrées en figure 1, de manière à faire apparaître des trajectoires de la fibre dans la bande souple. On a représenté la zone 10, où est disposée une fibre optique 20 et où la matrice polymérique comprend des fibres continues de renforcement, bordée par la zone 41 de matrice polymérique dépourvue de fibre continue de renforcement.

Selon l'exemple de la figure 8, la fibre optique est disposée dans une direction parallèle à l'axe longitudinal de la bande souple. Dans ce mode de réalisation la fibre optique est amenée à se déformer dans le sens longitudinal de manière sensiblement identique à la déformation de la bande souple. Cette configuration est de préférence choisie dans des cas où l'on souhaite mesurer de faibles déformations, par exemple inférieures à 4%, voire inférieures à 2%. En effet, on estime que la déformation avant rupture d'une fibre optique est en général inférieure ou égale à 4% dans le cas des fibres optiques à base de silice.

Selon l'exemple de la figure 9, la fibre optique est disposée de manière sinusoïdale autour d'une direction parallèle à l'axe longitudinal de la bande souple, avec une longueur de pas LP. Ce mode de réalisation peut permettre d'effectuer des mesures où la déformation de la bande souple est supérieure à la déformation à rupture de la fibre optique. En effet, quand la bande souple s'allonge, la fibre optique peut en un premier temps prendre une position sinusoïdale avec un pas LP croissant, jusqu'à s'approcher d'une position sensiblement parallèle à l'axe longitudinal de la bande souple. Il est ainsi possible d'accroître l'étendue de mesure de manière significative et de mesurer par exemple des déformations de l'ordre de 10% à 20%.

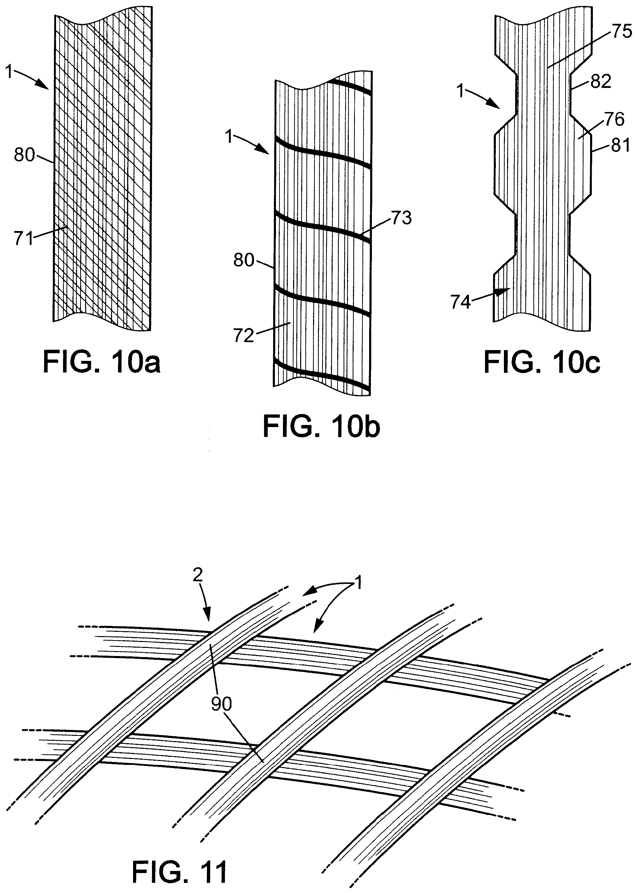

Les figures 10a à c représentent des vues schématiques de dessus de modes de réalisation de bandes souples selon l'invention. Les différents modes de réalisation présentés offrent des possibilités d'ajuster le transfert de charge entre le milieu et la bande souple.

La figure 10a présente un mode de réalisation où la surface principale 71 de la bande souple est faiblement rugueuse. Il en résulte un coefficient de frottement moyen entre le milieu et ladite bande souple.

La figure 10b présente un mode de réalisation où la surface principale 72 de la bande souple comprend des rugosités significatives, par exemple obtenues grâce à des bourrelets de matière 73 disposés dans le sens latéral à la surface de ladite bande souple. Il en résulte un coefficient de frottement accru entre le milieu et ladite bande souple en comparaison de la configuration illustrée par la figure 10a.

La figure 10c présente un mode de réalisation où la bande souple comprend une portion centrale 75 s'étendant longitudinalement et deux portions latérales de largeur variable comprenant une pluralité de segments 76 disposés en continuité de matière le long de la portion centrale 75. Un bord d'une telle bande souple comprend des segments rectilignes 82 limitant la portion centrale 75 et des segments rectilignes 81 limitant la plus grande largeur des portions latérales. Dans l'exemple représenté, la surface principale 74 de la bande souple est faiblement rugueuse. La présence des segments 76 permet d'accroître très sensiblement l'adhérence, par ancrages répartis, entre le milieu et la bande, en comparaison de la configuration illustrée par la figure 10a.

De manière générale, les bandes souples selon l'invention peuvent être fabriquées par extrusion suivant des techniques connues d'un homme du métier.

La figure 11 illustre de manière schématique un mode de réalisation selon l'invention où une pluralité de bandes souples 1 selon l'invention sont disposées en réseau 2 et solidarisées entre elles à leurs points d'intersection. A titre d'exemple, il est possible de solidariser les bandes souples dans les zones d'intersection 90 par thermo-soudage, par exemple en les portant en surface à des températures comprises entre 100 et 200°C.

Il est ainsi possible d'obtenir un maillage pour la métrologie dimensionnelle d'une structure et d'obtenir une cartographie en plan de déformations et/ou de températures.

Les bandes souples décrites ci-dessus peuvent être reliées à des dispositifs de métrologie susceptibles d'émettre de la lumière et de mesurer les caractéristiques de la lumière réfléchie, rétro diffusée ou transmise dans la ou les fibre(s) optique(s) comprise(s) dans lesdites bandes souples. On constitue ainsi des dispositifs permettant la localisation et la mesure de déformations et/ou de température, susceptible d'être installés dans ou sur un ouvrage.

On note que les bandes souples peuvent être, en fonction des besoins, disposées horizontalement ou verticalement ou de manière inclinée dans l'ouvrage.

L'invention ne se limite pas à ces types de réalisation et doit être interprétée de façon non limitative, et englobant tout mode de réalisation équivalent tel que défini par les revendications.

## Revendications

1. Bande souple (1), destinée à être enroulée puis installée sur ou dans un ouvrage de génie civil, susceptible de s'étendre longitudinalement selon un axe longitudinal, comprenant au moins une fibre optique (20) permettant d'effectuer des localisations et des mesures de déformation et/ou des mesures de température d'une structure où ladite fibre optique (20) est disposée sensiblement selon l'axe longitudinal, **caractérisée en ce que** ladite fibre optique (20) est entourée d'une matrice polymérique thermoplastique au moins partiellement renforcée, sensiblement selon l'axe longitudinal, de fibres continues de renforcement (30) s'étendant sensiblement selon l'axe longitudinal, où la quantité massique de fibres continues de renforcement, s'étendant sensiblement selon l'axe longitudinal, MFC, est supérieure ou égale à dix fois la quantité massique de fibre(s) optique(s), MFO,
comprenant au moins une zone (10,15) où la matrice polymérique comprend des fibres continues de renforcement (30), réparties de manière sensiblement uniforme, entourée d'une zone (40) de matrice polymérique dépourvue de fibre continue de renforcement,
ladite fibre optique (20) étant disposée au sein de ladite au moins une zone (10) où la matrice polymérique comprend des fibres continues de renforcement (30).

2. Bande souple selon la revendication 1 **caractérisée en ce qu'**elle comprend une pluralité de zones où la matrice polymérique comprend des fibres continues de renforcement (30) et au moins une fibre optique (20), et où ces zones sont disposées parallèlement entre elles dans le sens de la longueur de la bande, côte à côte dans le sens de la largeur de la bande et séparées par des zones (43) de matrice polymérique dépourvue de fibre continue de renforcement.

3. Bande souple selon l'une quelconque des revendications précédentes **caractérisée en ce qu'**au moins une fibre optique est disposée sensiblement parallèlement à l'axe longitudinal de la bande souple.

4. Bande souple selon l'une des revendications 1 ou 2 **caractérisée en ce qu'**au moins une fibre optique est disposée autour d'une direction sensiblement parallèle à l'axe longitudinal de la bande souple, par exemple selon une trajectoire sinusoïdale.

5. Réseau de bandes souples solidarisées entre elles, notamment par thermo-soudage, où les bandes souples comprennent les caractéristiques de l'une quelconque des revendications 1 à 4.

6. Dispositif de localisation et de mesures de déformation et/ou de mesure de température comprenant au moins une bande souple (1) selon l'une quelconque des revendications 1 à 4 ou comprenant un réseau de bandes souples selon la revendication 5 et un dispositif de métrologie relié à au moins une fibre optique d'une bande souple et susceptible d'émettre de la lumière et de mesurer des caractéristiques de la lumière réfléchie, rétro diffusée ou transmise dans ladite fibre optique.

7. Procédé de localisation et de mesures de déformation et/ou de mesure de température mettant en oeuvre un dispositif selon la revendication 6 comprenant une étape d'émission de lumière et une étape de mesure des caractéristiques de la lumière réfléchie, rétro diffusée ou transmise dans au moins une fibre optique dudit dispositif.

## Patentansprüche

1. Flexibler Streifen (1), der dazu bestimmt ist, aufgerollt und dann an oder in einem Ingenieurbauwerk angeordnet zu werden, der sich entlang einer Längsachse strecken lässt,
aufweisend mindestens eine optische Faser (20), die erlaubt, Lokalisierungen und Messungen einer Verformung und/oder Messungen einer Temperatur einer Struktur durchzuführen, wobei die optische Faser (20) im Wesentlichen entlang der Längsachse angeordnet ist,
**dadurch gekennzeichnet, dass** die optische Faser (20) von einer thermoplastischen Kunststoffmatrix umgeben ist, die im Wesentlichen entlang der Längsachse zumindest teilweise mit kontinuierlichen Verstärkungsfasern (30), die sich im Wesentlichen entlang der Längsachse erstrecken, verstärkt ist, wobei die Massenquantität der kontinuierlichen Verstärkungsfasern, die sich im Wesentlichen in der Längsachse erstrecken, MFC, größer oder gleich dem zehnfachen der Massenquantität der optischen Faser(n), MFO, ist,
aufweisend mindestens eine Zone (10, 15), in welcher die Kunststoffmatrix kontinuierliche Verstärkungsfasern (30), die auf eine im Wesentlichen gleichmäßige Weise verteilt sind, aufweist und welche von einer Kunststoffmatrixzone (40), die keine kontinuierlichen Verstärkungsfasern aufweist, umgeben ist,
wobei die optische Faser (20) im Innern der mindestens einen Zone (10), in welcher die Kunststoffmatrix kontinuierliche Verstärkungsfasern (30) aufweist, angeordnet ist.

2. Flexibler Streifen nach Anspruch 1, **dadurch gekennzeichnet, dass** er mehrere Zonen aufweist, in welchen die Kunststoffmatrix kontinuierliche Verstärkungsfasern (30) und mindestens eine optische Faser (20) aufweist, wobei diese Zonen in Richtung der Länge des Streifens parallel zueinander und in Richtung der Breite des Streifens Seite an Seite nebeneinander angeordnet sind und durch Kunststoffmatrixzonen (43) getrennt sind, die keine kontinuierlichen Verstärkungsfasern aufweisen.

3. Flexibler Streifen nach einem der vorstehenden Ansprüche, **dadurch gekennzeichnet, dass** mindestens eine optische Faser im Wesentlichen parallel zu der Längsachse des flexiblen Streifens angeordnet ist.

4. Flexibler Streifen nach einem der Ansprüche 1 oder 2, **dadurch gekennzeichnet, dass** mindestens eine optische Faser um eine Richtung herum, die im Wesentlichen parallel zur Längsachse des flexiblen Streifens ist, angeordnet ist, zum Beispiel entlang einer sinusartigen Trajektorie.

5. Netz aus flexiblen Streifen, die miteinander verbunden sind, insbesondere durch Warmverschweißung, wobei die flexiblen Streifen die Merkmale eines der Ansprüche 1 bis 4 aufweisen.

6. Vorrichtung zum Lokalisieren und Messen einer Verformung und/oder Messen einer Temperatur, aufweisend mindestens einen flexiblen Streifen (1) nach einem der Ansprüche 1 bis 4 oder aufweisend ein Netz aus flexiblen Streifen nach Anspruch 5 und eine Messvorrichtung, die mit mindestens einer optischen Faser eines flexiblen Streifens verbunden ist und fähig ist, Licht auszusenden und Eigenschaften des in der optischen Faser reflektierten, zurückgestreuten oder übertragenen Lichts zu messen.

7. Verfahren zum Lokalisieren und Messen einer Verformung und/oder Messen einer Temperatur unter Verwendung einer Vorrichtung nach Anspruch 6, aufweisend einen Schritt eines Ausendens von Licht und einen Schritt eines Messens von Eigenschaften des in der mindestens einen optische Faser reflektierten, zurückgestreuten oder übertragenen Lichts.

## Claims

1. Flexible strip (1), intended to be wound and then fitted on or in a civil engineering structure, suitable for extending longitudinally along a longitudinal axis, comprising at least one optical fibre (20) for locating and measuring deformation and/or measuring temperature of a structure where said optical fibre (20) is arranged substantially along the longitudinal axis, **characterised in that** said optical fibre (20) is surrounded by a thermoplastic polymeric matrix at least partially reinforced, substantially along the longitudinal axis, with continuous reinforcing fibres (30) extending substantially along the longitudinal axis, where the mass quantity of continuous reinforcing fibres, extending substantially along the longitudinal axis, MFC, is greater than or equal to ten times the mass quantity of optical fibre(s), MFO, comprising at least one zone (10, 15) where the polymeric matrix comprises continuous reinforcing fibres (30), distributed in a substantially uniform manner, surrounded by a zone (40) of polymeric matrix devoid of continuous reinforcing fibre,
said optical fibre (20) being arranged inside said at least one zone (10) where the polymeric matrix comprises continuous reinforcing fibres (30).

2. Flexible strip according to claim 1 **characterised in that** it comprises a plurality of zones where the polymeric matrix comprises continuous reinforcing fibres (30) and at least one optical fibre (20), and where these zones are arranged parallel with one another along the length of the strip, side by side along the width of the strip and separated by zones (43) of polymeric matrix devoid of continuous reinforcing fibre.

3. Flexible strip according to any one of the preceding claims **characterised in that** at least one optical fibre is arranged substantially parallel with the longitudinal axis of the flexible strip.

4. Flexible strip according to one of claims 1 or 2 **characterised in that** at least one optical fibre is arranged about a direction substantially parallel with the longitudinal axis of the flexible strip, for example along a sinusoidal trajectory.

5. Lattice of flexible strips connected to one another, particularly by heat sealing, where the flexible strips comprise the features of any one of claims 1 to 4.

6. Device for locating and measuring deformation and/or measuring temperature comprising at least one flexible strip (1) according to any one of claims 1 to 4 or comprising a lattice of flexible strips according to claim 5 and a metrology device connected to at least one optical fibre of a flexible strip and suitable for emitting light and measuring characteristics of the light reflected, backscattered or transmitted in said optical fibre.

7. Method for locating and measuring deformation and/or measuring temperature using a device according to claim 6 comprising a step for emitting light and a step for measuring characteristics of the light reflected, backscattered or transmitted in at least one optical fibre of said device.
